Europäisches Patentamt

European Patent Office

Office européen des brevets

(11) Veröffentlichungsnummer: **0 268 842 B1**

# EUROPÄISCHE PATENTSCHRIFT

(45) Veröffentlichungstag der Patentschrift: **22.01.92**

(51) Int. Cl.⁵: **H04L 27/00**, H04B 7/005

(21) Anmeldenummer: **87115612.1**

(22) Anmeldetag: **23.10.87**

(54) Adaptiver Frequenzbereichsentzerrer für Digital-Richtfunksysteme (DRS).

(30) Priorität: **31.10.86 DE 3637051**

(43) Veröffentlichungstag der Anmeldung:
**01.06.88 Patentblatt  88/22**

(45) Bekanntmachung des Hinweises auf die Patenterteilung:
**22.01.92 Patentblatt  92/04**

(84) Benannte Vertragsstaaten:
**AT CH DE FR GB IT LI NL SE**

(56) Entgegenhaltungen:
EP-A- 0 092 907
EP-A- 0 098 588
EP-A- 0 139 514
US-A- 4 361 892

ICC'85 INTERNATIONAL CONFERENCE ON COMMUNICATIONS, Chicago, 23.-26. Juni 1985, Band 3, Seiten 1234-1238, IEEE, New York, US; E. GIORIO et al.: "Design and performance of an adaptive IF equalizer for a 140 Mbit/s 16qam system"

COMMUTATION & TRANSMISSION, Band 6, Nr. 3, September 1984, Seiten 65-82, Issy-Les-Moulineaux, FR; G. BONNEROT et al.: "Systèmes hertziens. 140 MBIT/S à 4 et 6

GHz STN 65-140 - STN 36-140"

(73) Patentinhaber: **SIEMENS AKTIENGESELL-SCHAFT**
**Wittelsbacherplatz 2**
**W-8000 München 2(DE)**

(72) Erfinder: **Nossek, Josef A., Dr**
**Zugspitzstrasse 19**
**W-8127 Iffeldorf(DE)**
Erfinder: **Sebald, George, Dipl.-Ing.**
**Marienstrasse 2**
**W-8000 München 2(DE)**
Erfinder: **Lankl, Berthold, Dipl.-Ing.**
**Boschetsrieder Strasse 7**
**W-8000 München 70(DE)**
Erfinder: **Boshold, Klaus, Ing. (grad.)**
**Sudetenstrasse 7**
**W-8912 Kaufering(DE)**

**Beschreibung**

Die Erfindung betrifft einen adaptiven Frequenzbereichsentzerrer gemäß dem Oberbegriff des Patentanspruches 1.

Adaptive Frequenzbereichsentzerrer der vorgenannten Art sind dem Grundkonzept nach aus der Literaturstelle Proc. ICC'85, Nr. 39.1.1 - 39.1.5 bekannt, wo unter dem Titel "Design and Performance of an Adaptive IF Equalizer for a 140 Mbit/s 16 QAM System" über derartige Probleme berichtet wird.

Auch sind sie durch die Literaturstelle "ICC'85 INTERNATIONAL CONFERENCE ON COMMUNICATIONS, Chicago, 23.- 26. Juni 1985, Banc 3, Seiten 1234-1238, IEEE, New York, US; E. GIORGIO et al.: "Design and performance of an adaptive IF equalizer for a 140 Mbit/s 16QAM systems" bekannt geworden. Dort wird (vgl. insbesondere die Zusammenfassung; Seite 1234, linke Spalte, Zeiler 32 bis 38; Seite 1235, linke Spalte, Zeile 54 bis rechte Spalte, Zeile 9) ein adaptiver Frequenzbereichsentzerrer für Digital-Richtfunksysteme beschrieben, bei dem in einer Zwischenfrequenzlage (IF) ein adaptiver Entzerrer, bestehend aus einem Netzwerk aus konzentrierten Elementen (LC-Resonator), unter Kontrolle eines 8-Bit-Mikroprozessors und Mittel zur Spektrumsauswertung sowohl im minimalphasigen Betrieb (mit größerer Leistungsfähigkeit) als auch im nichtminimalphasigen Betrieb arbeiten kann.

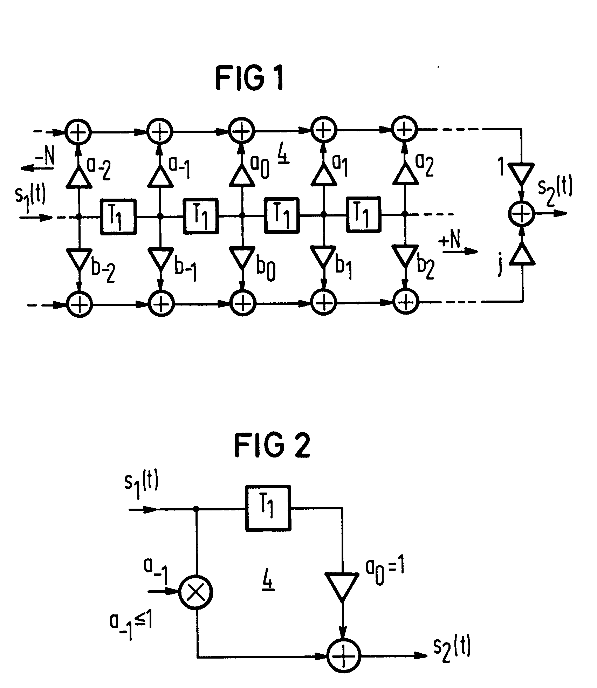

In der EP-A-0 139 514 (vgl. insbes. Seite 1, Zeilen 19 bis 27; Seite 5, Zeilen 25 bis 32; Seite 11, Zeilen 25 bis 36; Seite 13, Tabelle; Seite 14, Zeilen 25 bis 29; Figur 2) wird aber bereits eine digitale Funkempfangseinrichtung (20) beschrieben, die als adaptive Frequenzbereichsentzerrer Transversalfilter benutzt (25-1; 25-2) wobei die Koeffizienten (WT) der Transversalfilter durch eine vorgebbare Beeinflussung (SW: switch control signal SWC; internal control loop (A); external control path (B)) verändert werden können, so daß die Übertragungsfunktionen der Transversalfilter entweder vom minimalphasigen, linearphasigen oder nichtminimalphasigen Typ sind.

In Digital-Richtfunksystemen, insbesondere bei Anwendung von vielstufiger Quadraturamplitudenmodulation, soll eine Vorentzerrung des Leistungsdichtespektrums des Empfangssignals, das durch Mehrwegeausbreitung lineare Verzerrungen erfahren hat, vorgenommen werden. Diese Frequenzbereichtsentzerrung ist im Zusammenwirken mit den meist ebenfalls eingesetzten Zeitbereichsentzerrern zu optimieren. Dabei ist insbesondere der sogenannten "nicht minimalphasigen" Kanalsituation Rechnung zu tragen, die von Basisbandentzerrern mit quantisierter Rückkopplung ("Decision Feedback") nicht mit gleich großer Leistungsfähigkeit wie die "minimalphasige" Kanalübertragungsfunktion entzerrt werden kann.

Die bisher bekannten Frequenzbereichsentzerrer, die in der Zwischenfrequenzlage realisiert werden, beziehen die Information zu ihrer Einstellung aus Filtersonden in der ZF-Lage (Spektrumsanalyse, Filterbank) und benutzen zur Entzerrung minimalphasige Netzwerke aus konzentrierten Elementen. Realisiert werden meist sogenannte "Schrägleger", "Quadratische Entzerrer", oder "moving notch equalizer", die alle stets im minimalphasigen Fall eine erheblich größere Leistungsfähigkeit als im nicht minimalphasigen Fall zeigen.

Darüber hinaus besteht bei diesen Entzerreranordnungen die Gefahr, daß sie in bestimmten Situationen im Zusammenwirken mit dem adaptiven Zeitbereichsentzerrer sogar schädlich sein können, durch Erzeugung ferner Echos, die der Basisband-Zeitbereichsentzerrer auf Grund seiner endlichen Länge nicht beseitigen kann.

Der Erfindung liegt die Aufgabe zugrunde, den vorerwähnten Schwierigkeiten abzuhelfen und es wird das angegebene technische Problem durch Verwendung einer Transversalfilterstruktur gelöst, die durch Festlegung ihrer Topologie für minimalphasige oder nicht minimalphasige Kanäle optimiert werden kann. Ein Kompromiß zwischen beiden Fällen (linearphasig) ist ebenfalls möglich. Die spezielle Auslegung für eine aufwandsarme Realisierung wird angegeben. Ebenso ist eine aufwandgünstige sparsame Kriteriengewinnung für die Entzerrung des Leistungsdichtespektrums im Basisband eines QAM-Systems angegeben.

Bei einem adaptiven Frequenzbereichsentzerrer gemäß dem Oberbegriff des Patentanspruches 1 wird diese Aufgabe erfindungsgemäß gemäß den kennzeichnenden Merkmalen des Patentanspruches 1 gelöst.

In den abhängigen Ansprüchen sind vorteilhafte Ausgestaltungen angegeben.

Es ist aus der E-OS 0 179 393 bekannt, daß Transversalfilter eine vorgegebene Übertragungsfunktion (Entzerrungsfunktion) mit beliebiger Genauigkeit in einem - durch die Periodizität ihres Frequenzganges bestimmten - Frequenzband annähern können. Darüber hinaus ist es durch spezielle Festlegungen bezüglich ihrer Topologie und Koeffizientenwerte möglich, eine minimal-, linear- oder nicht minimalphasige Entzerrungsfunktion zu erzwingen.

Anhand von Ausführungsbeispielen wird nachstehend die Erfindung noch näher erläutert.

Es zeigen in der Zeichnung

Fig. 1    den an sich bekannten Aufbau eines komplexen Transversalfilters,

Fig. 2    eine spezielle Ausgestaltung des Transversalfilters mit nur einem Laufzeitglied und einer speziellen Bemessung des Laufzeitelementes, daß entweder ein nichtminimalphasiger Schrägleger (z.B. $T_1 = 5/(4f_{ZF})$) oder ein nichtminimalphasiger Buckelentzerrer (z.B. $T_1 = 3/(2f_{ZF})$) entsteht,

Fig. 3     die Signaturen eines 16 QAM/140 Mbit/s-Systems, das mit einem Basisbandentzerrer mit sieben komplexen Abgriffen und einem einfachen Schrägleger von minimal- bzw. nicht minimalphasigen Typ ausgestattet ist,

Fig. 4     eine Schaltung, bei der aus dem Basisband (BB) Steuerkriterien zur Einstellung des Transversalfilters gewonnen werden.

Im Ausführungsbeispiel von Fig. 1 ist ein Transversalfilter dargestellt, bei dem eine Vielzahl von Laufzeitgliedern $T_1$ über Bewertungsglieder (Multiplizierer) und Summierer in Kette geschaltet sind. Die Verbindung über Summierer ist durch ein Pluszeichen (+) kenntlich gemacht, die Bewertungsglieder, die ja die einzelnen Multipliziererkoeffizienten darstellen, sind mit $a_{-n}$ is $a_{+n}$ bzw. $b_{-n}$ bis $b_{+n}$ (Pfeile "-N" und "+N") bezeichnet. Das Eingangssignal ist mit $s_1$ (t) bezeichnet, das Ausgangssignal mit $s_2(t)$. Das Ausgangssignal $s_2(t)$ wird über die mit "1" und "j" bezeichneten Bewertungsglieder auf einen Ausgangssummierer zusammengefaßt. Bei der Erfindung wird für die komplexe Ausführungsform des durch die Bezugsziffer 4 kenntlich gemachten Transversalfilters von folgender Überlegung ausgegangen.

Die in Fig. 1 dargestellte "Serial-In/Parallel-Out"-Struktur eines Transversalfilters mit komplexen Koeffizienten ist für

$$\bullet \quad a_{-n}, \; b_{-n} = 0, \qquad\qquad n = 1, 2, \ldots N$$

$$\sum_{n=1}^{N} a_n^2 + b_n^2 \;\leqq\; a_0^2 + b_0^2$$

stets minmalphasig,

$\bullet$   $a_n = a_{-n}, \; b_n = -b_{-n}$      $n = 0, 1, 2, \ldots N$

stets linearphasig

$$\bullet \quad a_n, \; b_n = 0, \qquad\qquad n = 1, 2, \ldots N$$

$$\sum_{n=1}^{N} a_{-n}^2 + b_{-n}^2 \;\leqq\; a_0^2 + b_0^2$$

stets nicht minimalphasig.

Die gegebenen Bedingungen sind für den minimal- bzw. nicht minimalphasigen Fall hinreichend, aber nicht notwendig.

Das bedeutet, daß durch spezifische Strukturfestlegungen bzw. Schranken für die Koeffizientenwerte der Frequenzbereichsentzerrer für bestimmte Kanalsituationen optimiert bzw. konfiguriert (z.B. umgeschaltet) werden kann. Aus Aufwandsgründen sind jedoch vereinfachte reelle Ausführungen interessant.

Allgemein gilt für die reelle Ausführungsform folgendes.

Generell wird die elektrische Länge $T_1$ der Laufzeitelemente des Transversalfilters so festgelegt, daß in dem zu entzerrenden Spektrum keine periodischen Wiederholungen der Übertragungsfunktion auftreten. Sollen die realisierten Entzerrerfunktionen einfache "Schrägleger" bzw. "Buckelentzerrer" sein, so ergeben sich weitere Gesichtspunkte für die Festlegung der Laufzeitelemente, die eine besonders aufwandgünstige reelle Realisierung erlauben.

Im Ausführungsbeispiel von Fig. 2 besteht der Entzerrer aus nur einem Laufzeitglied $T_1$, dem die Koeffizienten $a_0 = 1$ und $a_{-1} \leqq 1$ zugeordnet sind. Fig. 2 zeigt spezielle Ausführungsformen, bei der durch eine besondere Wahl der Laufzeit entweder Schrägleger oder Buckelentzerrer entstehen. Wenn man

nämlich $T_1 = 5/(4f_{ZF})$ wählt, dann entsteht ein nicht minimalphasiger Schrägleger, wählt man z.B. $T_1 = 3/(2f_{ZF})$, dann entsteht ein nicht minimalphasiger Buckelentzerrer.

Fig. 2 zeigt also einen besonders einfachen nicht minimalphasigen Schrägleger, bei dem das Laufzeitelement so festgelegt ist, daß ein Nulldurchgang des "cosinus"-Frequenzganges in Spektrumsmitte liegt und periodische Wiederholungen innerhalb des Spektrums nicht auftreten.

Bleibt der Betrag des adaptiven Koeffizienten stets kleiner als 1, so ist der Entzerrer stets nicht minimalphasig. Für die meisten Anwendungen ist ein solch einfacher Schrägleger im Zusammenwirken mit einem Basisband-Zeitbereichsentzerrer - evtl. mit rekursivem Koeffizienten (Proc. ICC'86, S. 46.5.1 bis 46.5.5) ausreichend.

Durch einfache Umdimensionierung der Laufzeit in der Transversalstruktur in Fig. 2 kann ein sogenannter "Bukkelentzerrer" realisiert werden. Es liegt dann nicht ein "Nulldurchgang" sondern ein Extremwert des "cosinusförmigen" Frequenzganges in Spektrumsmitte.

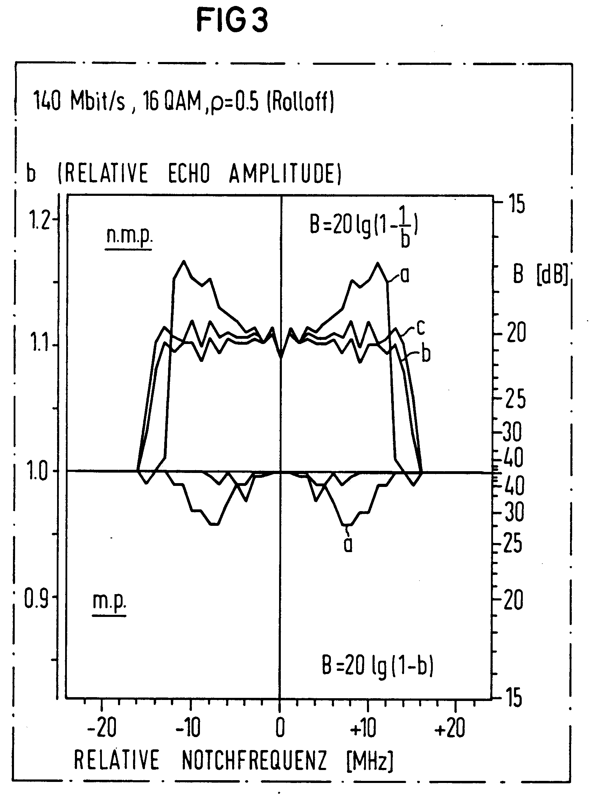

Fig. 3 zeigt die Signatur eines 16 QAM/140 Mbit/s-Systems. In Abhängigkeit von der relativen Notchfrequenz ist die relative Echoamplitude b bzw. eine Dämpfung B (Notchtiefe) in Dezibel aufgetragen sind. Die Kurve a) zeigt dabei einen modifizierten Basisbandentzerrer mit sieben Abgriffen, von denen einer gemäß der Literaturstelle Proc. ICC'86, Seiten 46.5.1 bis 46.5.5 rekursiv ist, die Kurve b) zusätzliche Schrägleger nach Fig. 2 als nicht minimalphasiger Typ und die Kurve c) bei einer Ausgestaltung nach Fig. 2 als minimalphasiger Typ. Bei der in Fig. 3 dargestellten Signatur wurde vorausgesetzt, daß der Schrägleger die von den Kanalverzerrungen verursachte Pegeldifferenz bei den beiden Nyquistfrequenzen beseitigt.

Für eine einfache Realisierung gelten folgende Gesichtspunkte.

Die Laufzeitelemente können prinzipiell (z.B. gemäß der E-OS 0 179 393) mit Hilfe der SAW-Technologie (Surface acoustic wave = Oberflächenwelle) realisiert und gemeinsam mit der Vervollständigung der Spektrumsformung nach Nyquist implementiert werden. In Abhängigkeit von Nachbarkanalinterferenzen kann auch die Trennung beider Funktionen und die konventionelle Realisierung der Laufzeitelemente mit konzentrierten Elementen sinnvoll sein.

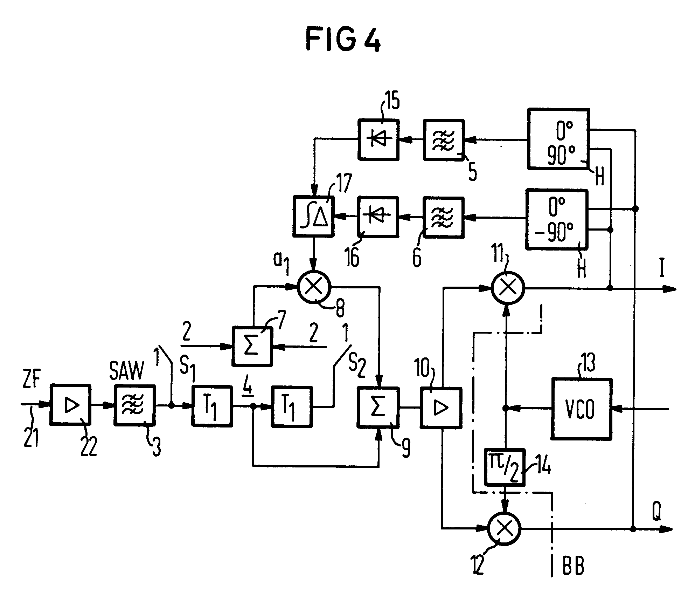

Besondere Bedeutung kommt der Kriteriengewinnung (Spektrumsanalyse) zu. Fig. 4 zeigt eine Anordnung, bei der Filtersonden im Basisband mit erheblich reduziertem Aufwand realisiert werden.

Im Ausführungsbeispiel von Fig. 4 ist der Eingang mit bezeichnet und es ist durch den Hinweis ZF kenntlich gemacht, daß es sich hier um einen Zwischenfrequenzeingang von beispielsweise 70 oder 140 MHz handeln kann. Ihm folgt ein Verstärker 22 dem ein SAW-Filter 3 nachgeschaltet ist. Das Transversalfilter ist wiederum mit der Bezugsziffer 4 kenntlich gemacht. Es besteht im Ausführungsbeispiel aus nur zwei Laufzeitgliedern $T_1$, die über die Schalter $S_1$ und $S_2$ auf einen Summierer 7 geschaltet sind. Dem Summierer 7 folgt ein Multiplizierer 8, in dem der Koeffizient $a_1$ einzustellen ist. Der Ausgang des Multiplizierers 8 führt auf einen Summierer 9, dessen zweiter Eingang vom Mittelabgriff der Laufzeitglieder $T_1$ gespeist wird. Nachgeschaltet ist ein Verstärker 10, an dessen beiden Ausgängen die Multiplizierer 11 und 12 liegen, die von einem spannungsgesteuerten Oszillator 13 (VCO) angesteuert werden. Dem Multiplizierer 12 ist ein Phasendrehglied 14 vorgeschaltet, das die Phase $\pi/2$ erzeugt. Durch die gestrichelte Linie BB ist zusätzlich kenntlich gemacht, daß nach diesem Schaltungsabschnitt das Basisband vorhanden ist. Das Inphasesignal ist mit I bezeichnet, das Quadratursignal mit Q. Sowohl das Inphasesignal I als auch das Quadratursignal Q werden über $\pm 90^{\circ}$-Hybridschaltungen H geführt. Dort sind nachgeschaltete Filtersonden 5 und 6, deren Ausgangssignale über Gleichrichter 15 und 16 auf einen Differenzintegrator 17 geschaltet sind. Das Basisband BB liegt zwischen 0 und $(1 + \rho) \cdot 17$ MHz. Wenn die Schalter $S_1$ und $S_2$ in der Stellung 1/1 sind, dann ergibt sich keine Entzerrung. Sind die Schalter $S_1$ und $S_2$ in der Stellung 2/1, dann ergibt sich ein nicht minimalphasiger Schrägleger bei dem z.B. $T_1 = 5/(4f_Z)_F$ ist. Wenn die Schalter $S_1$ und $S_2$ in der Stellung 1/2 sind, ergibt sich ein minimalphasiger Schrägleger und wenn die Schalter $S_1$ und $S_2$ in der Stellung 2/2 sind, dann ergibt sich ein linearphasiger Schrägleger. Im Beispiel ist davon auszugehen, daß die Zwischenfrequenz $f_{ZF} = 140$ MHz ist, daß ein 16 QAM/140 Mbit/s-System vorliegt und daß der Roll-off-Faktor $\rho = 0,5$ ist. Fig. 4 zeigt also ein einfaches Beispiel, das es ermöglicht, die Einstellkriterien für die Koeffizienteneinstellung des in den ZF-Teil geschalteten Transversalfilters 4 aus dem Basisband BB zu gewinnen.

**Patentansprüche**

1. Adaptiver Frequenzbereichsentzerrer für Digital-Richtfunksysteme (DRS), bei dem in einer Zwischenfrequenzlage (ZF) ein Transversalfilter (4) mit einstellbaren Koeffizienten ($a_n + jb_n$, n von -N bis +N) und Mittel zur Spektrumsauswertung zur Einstellung der Koeffizienten vorgesehen sind, und bei dem durch eine vorgebbare Beeinflussung der Koeffizienten ($a_n + jb_n$) die Übertragungsfunktion des Transversalfilters (4) vom minimalphasigen (mp), linearphasigen (lp) oder nichtminimalphasigen (nmp) Typ ist,

**dadurch gekennzeichnet,**

daß die Einstellkriterien für die Koeffizienten ($a_n$ + $jb_n$) des Transversalfilters (4) aus den demodulierten Basisband-Inphase-(I) und Quadratur-(Q) Signalen gewonnen wird, in der Weise, daß das Inphase-(I)- und Quadratur-(Q) Signal über ± 90˚-Hybride (H) zusammengefaßt und Filtersonden (5, 6) zugeführt werden.

2. Adaptiver Frequenzbereichsentzerrer nach Anspruch 1,
**dadurch gekennzeichnet,**
daß im Entzerrer nur zwei Laufzeitglieder ($T_1$) und ein einstellbarer Koffezient ($a_1$) vorgesehen sind und mit Schaltern ($S_1$, $S_2$) zwischen minimalphasigen (mp), linearphasigen (lp) und nichtminimalphasigen (nmp) Übertragungsfunktionen umgeschaltet wird (Fig. 4).

3. Adaptiver Frequenzbereichsentzerrer nach Anspruch 2,
**dadurch gekennzeichnet,**
daß bei rein nichtminimalphasigem (n m p) Betrieb ein Laufzeitglied und die Schalter ($S_1$, $S_2$) entfallen, so daß nur ein Laufzeitglied ($T_1$) vorzusehen ist (Fig. 2).

4. Adaptiver Frequenzbereichsentzerrer nach Anspruch 2 und Anspruch 3,
**dadurch gekennzeichnet,**
daß die Laufzeit ($T_1$) so bemessen ist, daß der Entzerrer für das zu entzerrende Frequenzband als Schrägleger wirkt (z.B. $T_1$ = 5/(4 $f_{7I}$)).

5. Adaptiver Frequenzbereichsentzerrer nach Anspruch 2 und Anspruch 3,
**dadurch gekennzeichnet,**
daß die Laufzeit ($T_1$) so bemessen ist, daß der Entzerrer für das zu entzerrende Frequenzband als Buckelentzerrer wirkt (z.B. $T_1$ = 3/(2 $f_{7F}$)).

**Claims**

1. Adaptive frequency band equaliser for digital radio relay link systems (DRS), in which a transversal filter (4) with adjustable coefficients ($a_n$ + $jb_n$, n from -N to +N) and means for spectrum analysis for adjusting the coefficients are provided at an intermediate frequency (ZF), and in which the transfer function of the transversal filter (4) is of the minimum-phase (mp), linear-phase (lp) or non-minimum-phase (nmp) type due to a predeterminable influencing of the coefficients ($a_n$ + $jb_n$), characterised in that the criteria for setting the coefficients ($a_n$ + $jb_n$) of the transversal filter (4) are obtained from the demodulated baseband in-phase (I) and quadrature (Q) signals, in such a manner that the in-phase (I) and quadrature (Q) signal is combined via ± 90˚ hybrids (H) and supplied to filter probes (5, 6).

2. Adaptive frequency band equaliser according to Claim 1, characterised in that only two delay sections ($T_1$) and one adjustable coefficient ($a_1$) are provided in the equaliser and switches ($S_1$, $S_2$) are used to switch between minimum-phase (mp), linear-phase (lp) and non-minimum-phase (nmp) transfer functions (Figure 4).

3. Adaptive frequency band equaliser according to Claim 2, characterised in that one delay section and the switches ($S_1$, $S_2$) are omitted with purely non-minimum-phase (nmp) operation so that only one delay section ($T_1$) has to be provided (Figure 2).

4. Adaptive frequency band equaliser according to Claim 2 and Claim 3, characterised in that the delay ($T_1$) is dimensioned in such a manner that the equaliser acts as slope adjuster for the frequency band to be equalised (for example $T_1$ = 5/(4 $f_{ZF}$)).

5. Adaptive frequency band equaliser according to Claim 2 and Claim 3, characterised in that the delay ($T_1$) is dimensioned in such a manner that the equaliser acts as bulge equaliser for the frequency band to be equalised (for example $T_1$ = 3/(2 $f_{ZF}$)).

**Revendications**

1. Égaliseur adaptatif de bandes de fréquences pour des systèmes hertziens numériques (DRS), dans lequel un filtre transversal (4) possédant des coefficients réglables ($a_n + jb_n$, n de -N à +N) et des moyens d'évaluation du spectre pour le réglage des coefficients, dans une position de fréquence intermédiaire (ZF), et dans lequel, grâce à une influence, pouvant être prédéterminée, des coefficients ($a_n + jb_n$), la fonction de transfert du filtre transversal (4) est du type à phase minimale (mp), à phase linéaire (lp) ou non à phase minimale (nmp),
caractérisé par le fait
que les critères de réglage pour les coefficients ($a_n + jb_n$) du filtre transversal (4) sont obtenus à partir des signaux démodulés en phase (I) et en quadrature (Q) dans la bande de base, en ce sens que le signal en phase (I) et le signal en quadrature (Q) sont réunis par l'intermédiaire d'hybrides à ±90˚ (H) et sont envoyés à des sondes - filtres (5,6).

2. Égaliseur adaptatif de bandes de fréquences suivant la revendication 1, caractérisé par le fait
que dans l'égaliseur, il n'est prévu que deux circuits de retardement ($T_1$) et un coefficient réglable ($a_1$) et que la commutation entre les fonctions de transfert à phase minimale (mp), à phase linéaire (lp) et non à phase minimale (nmp) est réalisée au moyen d'interrupteurs ($S_1$, $S_2$) (figure 4).

3. Égaliseur adaptatif de bandes de fréquences suivant la revendication 2, caractérisé par le fait que
dans le cas d'un pur fonctionnement non à phase minimale (mnp), un circuit de retardement et les interrupteurs ($S_1$, $S_2$) sont supprimés de sorte qu'il suffit de prévoir un circuit de retardement ($T_1$) (figure 2).

4. Égaliseur adaptatif de bandes de fréquences suivant les revendications 2 et 3, caractérisé par le fait
que le temps de propagation ($T_1$) est dimensionné de telle sorte que l'adaptateur agit en tant que dispositif de réglage oblique pour la bande de fréquences, dont les distorsions doivent être corrigées (par exemple $T_1 = 5/(4\ f_{ZF})$).

5. Égaliseur adaptatif de bandes de fréquences suivant les revendications 2 et 3, caractérisé par le fait
que le temps de propagation ($T_1$) est dimensionné de telle sorte que l'égaliseur agit en tant que correcteur de déformations pour la bande des fréquences, dont les distorsions doivent être corrigées (par exemple $T_1 = 3/(2f_{ZF})$).

# FIG 1

# FIG 2

# FIG 3

140 Mbit/s , 16 QAM, $\rho$=0.5 (Rolloff)

b  (RELATIVE  ECHO  AMPLITUDE)

$B = 20 \lg(1 - \frac{1}{b})$

B [dB]

n.m.p.

a

c

b

m.p.

a

$B = 20 \lg(1 - b)$

RELATIVE  NOTCHFREQUENZ  [MHz]

# FIG 4